# EUROPEAN PATENT SPECIFICATION

(11) **EP 1 456 743 B1**
(45) Date of publication and mention of the grant of the patent: **04.10.2017**
(21) Application number: 02795932.9
(22) Date of filing: 18.12.2002
(51) Int. Cl.: G06F 3/12, H04L 29/06, H04M 1/725, H04N 1/00, H04L 29/08, H04W 84/04, H04W 88/02

(54) **METHOD AND APPARATUS FOR PROVIDING OUTPUT FROM REMOTELY LOCATED DIGITAL FILES USING A MOBILE AND OUTPUT DEVICE**
VERFAHREN UND GERÄT, UM FÜR AUSGABE AUS EINER ENTFERNTEN DATEI, DURCH VERWENDUNG EINES TRAGBAREN GERÄTES, ZU SORGEN
PROCEDE ET APPAREIL DESTINES A FOURNIR UNE SORTIE A PARTIR DE FICHIERS NUMERIQUES SITUES A DISTANCE AU MOYEN D'UN DISPOSITIF MOBILE ET D'UN DISPOSITIF DE SORTIE

(30) Priority: 18.12.2001 US 24068
(43) Date of publication of application: 15.09.2004
(73) Proprietor: Senshin Capital, LLC, Wilmington, DE 19808 (US)
(72) Inventor: PINEAU, Richard A., No. Andover, MA 01845 (US)
(74) Representative: Small, Gary James
(86) International application number: PCT/US2002/040547
(87) International publication number: WO 2003/052579

(56) References cited:
- WO-A1-99/00968
- WO-A2-01/50713
- GB-A- 2 287 623
- JP-A- 2001 331 435
- US-A- 6 134 450

## Description

### Field of the Invention

The present invention relates to techniques for providing output digital content files and, more particularly, to techniques for providing output remote content files using a mobile device and a output device.

### Related Art

There is an increasing demand for mobile computing devices and for devices with wireless communication
capabilities. For example, both cellular telephones and mobile computing devices such as personal digital assistants (PDAs) are becoming increasingly widespread. Furthermore, devices that incorporate both the features of cell phones and of computing devices are becoming increasingly common. For example, cellular telephones are increasingly being equipped with the ability to send and receive email over the Internet and to browse the World Wide Web ("the Web").

Another current trend in the computing industry is the increasing popularity of digital photography, spurred in large part by the advent of low-cost, high-quality digital cameras. An increasing number of web sites allow users to upload digital photographs and other digital content files to the Web, where such content files may subsequently be viewed, shared, edited, and output or saved on conventional output devices using computers connected to the Web using conventional Internet connections.

As mentioned above, some cell phones - referred to herein as "Internet-enabled cell phones" - are capable of communicating over the Internet. When a user makes a conventional voice telephone call using such a cell phone, the cell phone operates in a first mode (referred to herein as "voice mode"), in which the cell phone places the call over a (typically analog) wireless network designated for voice telephone calls. This network is referred to herein as a "voice network," although such a network may also be capable of carrying data communications. When in voice mode, the display of the cell phone typically displays information such as the telephone number being called, the current duration of the call, and the current strength of the wireless signal.

To connect to the Internet using an Internet-enabled cell phone, the user typically issues a special command to the cell phone (such as by pressing a designated button or selecting a designated menu choice), in response to which the cell phone typically connects to the Internet over a wireless digital network that is designated for data communications. This network is referred to herein as a "data network," and is typically not the same network as the voice network used to place voice calls. While connected to the Internet in this manner, the cell phone typically operates in a second mode, referred to herein as "Internet mode". While the cell phone is in Internet mode, the user may engage in activities such as sending/receiving email and browsing the World Wide Web. The cell phone is typically equipped with special software, such as an email client and web browser (also referred to as a "microbrowser"), for enabling the user to engage in these activities. When in Internet mode, the display of the cell phone typically displays the text of the email currently being sent/received or the contents of the web page currently being viewed. The user uses keys on the cell phone keypad to perform Internet-related functions such as entering text into an email message and navigating through web sites.

Some cellular telephones can also operate in a third mode - referred to herein as "modem mode" - in which they perform functions similar to those of a conventional modem. To operate the cell phone in modem mode, the user typically connects a conventional desktop or laptop computer to a data port on the cellular telephone using a data cable. Using communications software installed on the computer, the user instructs the computer to connect to the Internet. In response, the computer instructs the cell phone to make a call to an Internet Service Provider (ISP) using instructions similar to those used to control a conventional modem. In response to these instructions, the cell phone enters modem mode and calls the desired telephone number over the same voice network that is used to make voice telephone calls. Once an Internet connection is established, the computer may communicate over the voice network through the cell phone as if the cell phone were a conventional modem. While in modem mode, the display of the cell phone is typically blank, since the cell phone is being used as a passive conduit of information that is not in a format suitable for display by the cell phone.

There is currently no standard defining the output of a cell phone's data port while the cell phone is operating in the Internet mode. For example, while the cell phone is operating in Internet mode, the cell phone's data port may not transmit any data, or may not transmit data in a format that can be understood by other devices.

An Internet-enabled cell phone may typically operate in only one of the three modes described above (voice mode, Internet mode, and modem mode) at a time. For example, it is typically not possible for an Internet-enabled cell phone to be connected to the Internet in Internet mode at the same time as the user is using the cell phone to make a voice call in voice mode. Similarly, it is typically not possible for an Internet-enabled cell phone to operate in both Internet mode and modem mode at the same time.

When a user with an Internet-enabled cell phone desires to output or save a digital content file stored on a web site, the user typically must use a conventional desktop or laptop computer to connect to the Internet using the cell phone in modem mode. Once connected, the user uses web browser software on the computer to browse to the web site on which the digital content file is stored, downloads the content file from the web site, and output or saves the content file using a conventional output device connected to the computer by issuing a "output or save" command to the web browser or other software executing on the computer. As described above, the display of the cell phone is typically blank during this sequence of events.

Conventional cell phones present the following problem for users who desire to output or save digital content files stored on a web site. Consider a user who has used a cell phone in Internet mode to connect to the Internet. The user has used the cell phone's web browser to identify a digital content file on a web site. Using conventional Internet-enabled cell phones, it is typically not possible for the user to output or save the digital content file without first terminating the cell phone's connection to the Internet. The reason for this is that, while connected to the Internet in Internet mode, the cell phone does not support communication with a output device, either directly or through a host computer. Therefore, it is not possible for the cell phone to transmit the desired content file to a computer or directly to a output device for outputting or saving. As a result, to output or save an content file identified on a web site while browsing the web using a cell phone, the user must typically disconnect the cell phone from the Internet and output or save the content file by connecting to the Internet using the cell phone in modem mode, as described above.

More generally, it is typically not possible for a cell phone to output or save a digital content file, regardless of the network over which the content file is received, directly to a output device. Rather, it is typically necessary to connect the cell phone to a computer that is connected to a output device, and to use the computer to download the content file with the cell phone in modem mode and then output or save the content file using the output device.

### [] page 6a inserted here

The need to connect the cell phone to a non-mobile computing device such as a conventional desktop computer in order to output or save content files limits the ability of the user to take full advantage of the mobility otherwise provided by the cell phone. What is needed, therefore, are improved techniques for downloading and providing digital output content files using a mobile computing device.

### SUMMARY

The present invention provides a system and a method for downloading and providing a digital output content file from a web site using a mobile communications device while the mobile communications device is connected to the Internet as defined in the appended independent claims.

Techniques are disclosed for coupling a output device to a mobile communications device (such as a cellular telephone), downloading output information (such as a digital content file) to the output device over a wireless network through the mobile communications device, and using the output device to output or save output based on the output information.

The output information may be downloaded to the output device in any of a variety of ways. For example, a user may use the mobile communications device to connect for insertion into page 6

[WO0150713 discloses a mobile phone having a WAP browser that receives and interprets Wireless Markup Language (WML) data for display and print.

WO9900968 discloses a system for providing a hard copy of a document and/or an electronic message. The system comprises a number of printers each having an identity, a network for connecting the printers to a mobile communication unit, e.g. a cordless telephone. The user can select which, of the number of available printers, that is to be used for providing a hard copy.

JP2001331435A discloses a web server that receives a request for enabling communication to a device from a mobile phone. As the web server receives the request, an appropriate device driver stored in the web server is selected and executed and the communication between the client and the device is converted. The converted communication understandable to the device is transmitted from the web server to the device through the client. On the basis of a client type and a device type, the appropriate device driver is selected from a library and executed and the communication between the client and the device is converted.

GB2287623A discloses a device that comprises a scanner unit and a printer unit, both units being connected to a control unit and a communications module of external devices which module comprises a communications unit and an interface, preferably a PCMCIA interface; the communications unit being arranged to handle the control of the data communications transmitted through the interface, and a circuit card, preferably a PCMCIA card, being adapted to the card slot of the interface, the functions of the scanner/printer device being defined and managed by means of and through the PCMCIA card. The scanner/printer device can thus be used as a printer, a scanner and a transmitting and receiving telefax device. The device is connected by line or infra-red to external devices, such as a laptop computer, mobile phone, or LAN, via the card.] to a output server that serves the output information. A connection between the mobile communications device and the output server may be established in any of a variety of ways, such as by: (1) using the mobile communications device to place a telephone call to the output server over a wireless voice network, (2) using the mobile communications device as a modem to establish a connection to the output server over a data network, or (3) using the mobile communications device in an Internet mode to connect to the output server (or an application server associated with the output server) over the Internet.

Alternatively, the mobile communications device may establish a connection (of any of the types described above) to a transaction server with which a user of the mobile communications device may conduct a transaction. The transaction may, for example, be a transaction for requesting or purchasing items such as music, movies, video clips, tickets, maps, brochures, coupons, photographs, menus, or schedules (where such other items may also contain audiovisual information). Upon completion of the transaction, the transaction service may communicate with the output server described above to produce the output information to be outputted or saved (such as a digital content file of the purchased item). The output information may be transmitted to the output device by, for example, the output server or the transaction service.

Prior to transmission of the output information to the output device, the output server may process the output information to tailor the output information based on the capabilities of the output device. For example, the output server may tailor the output information to comport with the format and/or file size at which the output device is capable of storing or processing. The output device may, for example, transmit information descriptive of its capabilities to the output server over any of the connections described above at any appropriate time.

The output server and/or the transaction service may communicate with the output device using one or more output protocols for communicating over the connections described above. The output device may be equipped with a controller implemented in hardware, software, or any combination thereof for communicating according to the output protocol through a port on the output device that is coupled to the mobile communications device.

Output device as described herein refers to any device for receiving input and producing output. Such input/output includes, for example, still images, audio files (such as MP3 files) and audiovisual files (such as DVD compatible files). The device referred to as output device herein may be, for example, a CD drive (such as CD-r or a CD-RW drive), a DVD drive (such as a DVD-R, DVD-RAM, DVD-RW+, DVD-RW drive) or an MP3 or other digital music player. The output may be, for example, a digital audio file such as MP3 or a controlled access digital audio file such a .NAP file, an audiovisual file such as an MPEG file, or files in other compressed formats for audio or audiovisual information. The output may be in the form of a computer readable medium such as, for example, a CD-R, CD-RW disk or a DVD-r, DVD-RAM, DVD-RW, or DVD-RW+ disk, or stored in a solid state memory such as RAM.

Additional aspects and embodiments of the present invention and advantages thereof will be described in more detailed below.

### BRIEF DESCRIPTION OF THE DRAWINGS

FIG. 1 is a block diagram of a system for downloading and providing as output a digital content file from a web site using a cellular telephone while the cellular telephone is connected to the Internet in Internet mode according to one embodiment of the present invention.
FIGS. 2A-2B are data flow diagrams of a process that is used by the system of FIG. 1 to output or save a digital content file according to one embodiment of the present invention.
FIG. 3 is a block diagram of a system for downloading and providing an output content file from a web site using a cellular telephone while the cellular telephone is connected to the Internet in modem mode according to one embodiment of the present invention.
FIG. 4 is a data flow diagram of a process that is used by the system of FIG. 3 to output or save a content file according to one embodiment of the present invention.
FIG. 5 is a block diagram of a system for downloading and providing an output content file using a cellular telephone while the cellular telephone is operating in modem mode to connect a content file server to a output device according to one embodiment of the present invention.
FIG. 6 is a data flow diagram of a process that is used by the system of FIG. 5 to output or save a content file according to one embodiment of the present invention.
FIG. 7 is a block diagram of a system for downloading and providing an output content file associated with a transaction using a cell phone operating in Internet mode according to one embodiment of the present invention.

### DETAILED DESCRIPTION

Techniques are disclosed for coupling a output device to a mobile communications device (such as a cellular telephone), downloading output information (such as a digital content file) to the output device over a wireless network through the mobile communications device, and using the output device to output or save based on the output information.

The output information may be downloaded to the output device in any of a variety of ways. For example, a user may use the mobile communications device to connect to a output server that serves the output information. A connection between the mobile communications device and the output server may be established in any of a variety of ways, such as by: (1) using the mobile communications device to place a telephone call to the output server over a wireless voice network, (2) using the mobile communications device as a modem to establish a connection to the output server over a data network, or (3) using the mobile communications device in an Internet mode to connect to the output server (or an application server associated with the output server) over the Internet.

Alternatively, the mobile communications device may establish a connection (of any of the types described above) to a transaction server with which a user of the mobile communications device may conduct a transaction. The transaction may, for example, be a transaction for requesting or purchasing items such as music, movies, video clips, tickets, maps, brochures, coupons, photographs, menus, or schedules(where such other items may also contain audiovisual information). Upon completion of the transaction, the transaction service may communicate with the output server described above to produce the output information to be outputted or saved (such as a digital content file of the purchased item). The output information may be transmitted to the output device by, for example, the output server or the transaction service.

Prior to transmission of the output information to the output device, the output server may process the output information to tailor the output information based on the capabilities of the output device. For example, the output server may tailor the output information to comport with the format and/or file size which the output device is capable of storing or providing. The output device may, for example, transmit information descriptive of its capabilities to the output server over any of the connections described above at any appropriate time.

The output server and/or the transaction service may communicate with the output device using one or more output protocols for communicating over the connections described above. The output device may be equipped with a controller implemented in hardware, software, or any combination thereof for communicating according to the output protocol through a port on the output device that is coupled to the mobile communications device.

Various aspects and embodiments of the present invention will now be described in more detail.

In a first aspect of the present invention, techniques are provided for enabling an content file to be downloaded over the Internet through a cellular telephone and output or saved while the cellular telephone is connected to the Internet in Internet mode. The cellular telephone may be connected directly to a output device which outputs or saves the downloaded content file, without requiring that the cell phone be connected to an intermediate computer (e.g., a desktop or laptop computer) that controls the output device.

In one embodiment of the present invention, techniques are provided for: (1) enabling a user to identify a digital content file over the Internet using a cellular telephone operating in Internet mode (such as by using a web browser executing on the cellular telephone), (2) connecting a output device to the cell phone, (3) transmitting the content file to the output device through the cellular telephone without disconnecting the cellular telephone from the Internet, and (4) providing the output content file using the output device.

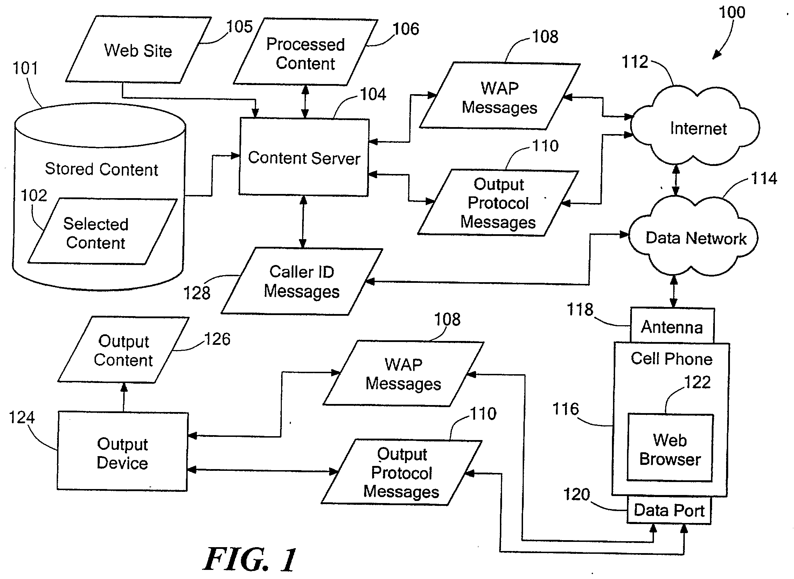

For example, referring to FIG. 1, a system 100 is shown which may be used in one embodiment of the present invention to download a selected content file 102 from an content file server 104 to a output device 124 using a cellular telephone 116 operating in Internet mode, without disconnecting the cellular telephone 116 from the Internet 112.

Operation of the system 100 is now described in more detail. The cellular telephone 116 (also referred to herein simply as a cell phone) may be any cell phone that is capable of establishing a connection to the Internet 112. As described above, a user of the cell phone 116 may connect the cell phone 116 to the Internet 112 using features provided by the cell phone 116, such as by pressing a designated button on the cell phone's keypad or by selecting a designated menu choice on the display of the cell phone 116. In response to the user's instruction to connect to the Internet 112, the cell phone 116 enters an Internet mode of operation and establishes a connection to the Internet 112 over a wireless digital data network 114. Antenna 118 of cell phone 116 transmits and receives communications over the data network 114. The data network 114 is typically a network specially designated for carrying wireless data communications, such as Internet communications.

Assuming for purposes of example that the only Internet service provided by the cell phone 116 is access to the World Wide Web, while operating in Internet mode the cell phone 116 executes a web browser 122, shown in FIG. 1 in block diagram form. The web browser 122 is software and/or hardware that enables the user to browse the Web using the cell phone 116. For example, the web browser 122 allows the user to navigate to selected web pages by, for example, selecting hyperlinks to such web pages using the cell phone's keypad and/or touch screen. The web browser 122 displays selected web pages on the display of the cell phone 116 and allows the user to interact with displayed web pages by, for example, entering text using the cell phone's keypad or selecting hyperlinks on such web pages using the cell phone's keypad and/or touch screen.

As shown in FIG. 1, an content file server 104 serves a plurality of stored content files 101. The content file server 104 is accessible over the Internet 112. For example, in one embodiment of the present invention, the content file server 104 is a web server that hosts a web site 105 through which stored content files 101 may be accessed. In such an embodiment, content file server 104 may provide a convenient user interface through which users may upload, download, and view stored content files. Examples of techniques for uploading content files to such a web server are described in more detail in U. S. Patent Application Serial No. 09/870,536,"Method and System for Remote Utilizing a Mobile Device to Share Data Objects."

In another embodiment, a separate application server (not shown) provides the primary content and functionality of web site 105 for uploading, downloading, and viewing stored content files 101. The application server may also manage other information such as user profiles and user usage statistics. In such an embodiment, the content file server 104 may perform the limited tasks of storing and retrieving stored content files 101 as instructed by the application server. As a result, in such an embodiment the combination of the application server and the content file server 104 provide a coherent user experience in which the user may upload, download, and view stored content files 101.

The functions performed by the content file server 104 may be further subdivided into additional servers and/or applications as may be convenient for a particular purpose. It should be appreciated, therefore, that the single content file server 104 is described herein as performing all functions related to web site 105 and stored content files 101 merely for ease of illustration and explanation.

In one embodiment, the content file server 104 is capable of sending and receiving information that is suitable for transmission over the wireless data network 114. Typically, such networks use the Wireless Application Protocol (WAP) for communication. WAP supports a wide variety of wireless networks and operating systems, and is convenient for use with microbrowsers, such as the web browser 122 executing on the cell phone 116. Certain web sites have WAP servers that serve the content of their sites in WAP format, using markup languages such as the compact markup language (c-HTML) and the Wireless markup language (WML), so that it is suitable for transmission to and display by handheld devices. It should be appreciated that although WAP is used herein as an example of a protocol that may be used by the content file server 104 and other components shown in FIG. 1, WAP is used merely for purposes of example and is not a limitation of the present invention. Other protocols, including but not limited to the NTT DoCoMo I-mode protocol, may be used.

As shown in FIG. 1, in one embodiment content file server 104 and cell phone 116 communicate with each other using messages 108 defined according to WAP and transmitted over the Internet 112 and the data network 114. For example, when a user of the cell phone 116 instructs the web browser 122 to navigate to the web site 105 hosted by the content file server, the web browser 122 downloads the web site 105 (or portions thereof) by communicating with the content file server 104 using WAP messages 108. Although WAP messages 108 are illustrated near content file server 104 in FIG. 1, it should be appreciated that WAP messages 108 may originate from either the content file server 104 or the cell phone 116 and are transmitted across the Internet 112 and data network 114.

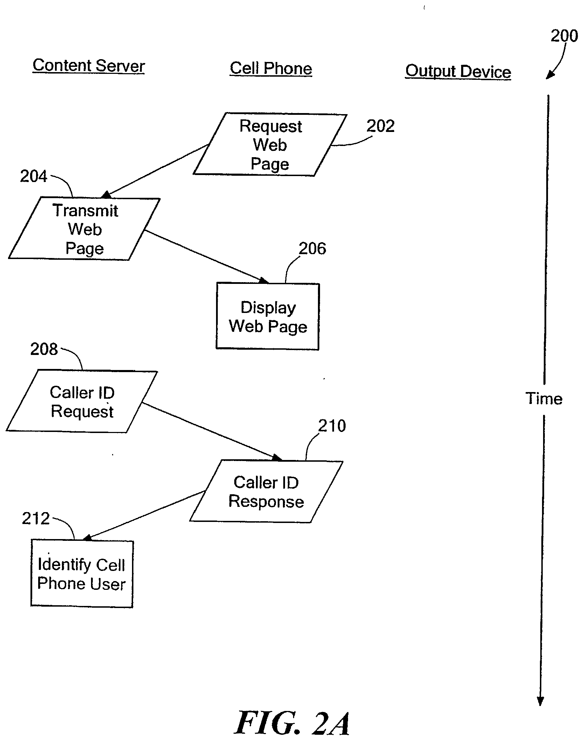

Referring now to data flow diagram 200 of FIGS. 2A-2B, an example of a method that may be used to download and output or save a content file using the system 100 shown in FIG. 1 is now described. FIGS. 2A-2B illustrate actions performed and messages transmitted by content file server 104, cell phone 116, and output device 124. More specifically, diagram 200 includes three columns, corresponding to the content file server 104, cell phone 116, and output device 124. An action performed by one of these components is indicated by a rectangle in the corresponding column, and a message transmitted by the component is indicated by a non-rectangular parallelogram in the corresponding column. A message transmitted by a first component to a second component is indicated by a parallelogram describing the message in the first component's column, connected to an arrow ending in the second component's column. Diagram 200 has a time axis which runs downward, indicating the sequence in which actions are performed and messages are transmitted. The description of FIGS. 2A-2B below will further clarify the diagram 200.

The user of cell phone 116 may use the web browser 122 to browse to a web page in web site 105 through which the stored content files 101 served by content file server 104 may be accessed. The web page may, for example, be a web page having a user interface that simulates a page of a photo album. In particular, web browser 122 sends a WAP message to content file server 104 requesting the web page (step 202). In response, content file server 104 transmits the requested web page to browser 122 (step 204). Browser 122 displays the web page (step 206).

In one embodiment of the present invention, the cell phone 116 echoes all WAP messages 108 sent and received by the cell phone 116 on the data port 120. As a result, as shown in FIG. 1, WAP messages 108 sent and received by the cell phone 116 are also transmitted to output device 124, which is connected to the data port 120. The output device 124 may therefore monitor WAP messages 108 sent and received by cell phone 116. It should be appreciated, however, that the output device 124 need not be connected to the cell phone 116 prior to receiving the processed content file in step 222 (e.g., while the user is browsing the Web and selecting the selected content file 102). The cell phone 116 may be a conventional cell phone which echoes WAP messages 108 in this manner, or a cell phone that has been modified to echo WAP messages 108.

In one embodiment of the present invention, when the user browses to the web page hosted by content file server 104, content file server identifies the cell phone 116 using caller ID messages 128 transmitted over data network 114. The caller ID messages 128 may, for example, identify the telephone number of cell phone 116. For example, referring to FIG. 2A, content file server 104 sends a caller ID request to cell phone 116 (step 208), in response to which cell phone 116 sends a caller ID response containing the requested information (step 210). The content file server 104 identifies the cell phone user using the caller ID response (step 212). It should be appreciated, however, that the content file server 104 may identify the cell phone 116 using a unique identifier other than the cell phone's telephone number. For example, a the cell phone's serial number, permanently stored in the device when the device is manufactured, may also be used by the content file server 104 as a unique identifier to identify the cell phone 116.

As described in more detail in the co-pending patent application entitled "Method and System for Remote Utilizing a Mobile Device to Share Data Objects," users may create an account on the web site 115. When a user creates such an account, information about the user, such as the user's login name, password, and cell telephone number (obtained using caller ID), are recorded by the content file server 104 in a database. Creation of such an account enables personalization of features provided by web site 105, such as creation of personalized photo albums to which the user's digital photographs may be uploaded.

As a result, when the user browses to the web page (steps 202-206) as described above, and the content file server 104 identifies the user's cellular telephone number using caller ID messages 128, the content file server 104 may automatically log the user in to the user's account. The content file server 104 may then display a personalized web page to the user, such as by displaying the user's personalized photo album to the user. If the user has not previously created an account, or if the user is calling from a different cell phone, the content file server 104 may prompt the user to log in by entering the user's login name and password. It should be appreciated that the use of user accounts is described herein merely for purposes of example and does not constitute a limitation of the present invention. Rather, providing output and downloading of content files may be performed without the creation or use of user accounts.

After browsing to the web page (steps 202-206), the user selects an content file 102 for output or saving. The selected content file 102 may be any of the stored content files 101. The user may perform such a selection by, for example, touching a thumbnail of the content file 102 on a touch screen of the cell phone 116 or hitting a key on the cell phone's keypad corresponding to the selected content file 102.

Assuming for purposes of example that the user desires to output or save the selected content file 102, the user issues a "output" or "save" command to output or save the selected content file 102. The user may issue such a command by, for example, pressing a designated button on the cell phone's keypad or selecting a "output" or "save" menu choice from the web page being displayed. The output or save command is transmitted to the content file server 104 using techniques that are well known to those of ordinary skill in the art (step 214).

In response to receipt of the "output or save" command, the content file server 104 extracts the selected content file 102 (step 216) and optionally processes the selected content file 102 to generate processed content file 106 (step 218). Various kinds of processing that may be performed on the selected content file 102 to produce processed content file 106 are described in more detail below. Although the description below refers to transmission of the processed content file 106 to the output device 124 for output or saving, it should be appreciated that the selected content file 102 may alternatively be transmitted to the output device 124 without any additional processing.

After extracting the selected content file 102 and performing any processing to generate processed content file 106, the content file server 104 transmits the processed content file 106 to the cell phone 116 over the Internet 112 and the data network 114 using appropriate WAP messages 108 (step 220). In one embodiment, content file server 104 communicates with output device 124 using an content file output protocol designed to facilitate communication between content file server 104 and output device 124 for purposes of performing functions such as downloading processed content file 106 to the output device 124. Various embodiments of the content file output protocol are described in more detail below.

As described above, output device 124 monitors all messages (e.g., both WAP messages 108 and content file protocol messages 110) received by cell phone 116 although, as described above, the output device 124 need not be connected to the data port 120 of the cell phone 116 prior to step 222. Output device 124 may perform this monitoring in any of a variety of ways. For example, in one embodiment of the present invention, the output device 124 is equipped with hardware and/or software that is capable of sending and receiving content file protocol messages 110. The output device 124 may, for example, monitor the data port 120. While monitoring the data port 120, output device 124 may ignore WAP messages 108 and respond to messages that conform with the content file output protocol. Upon identifying such a conforming message, the output device 124 may respond accordingly. The output device 124 may send content file protocol messages 110 to content file server 104 by transmitting content file protocol messages 110 to the data port 120. These messages are forwarded by cell phone 116, through its antenna 118, to content file server 104 over data network 114 and Internet 112.

For example, when the content file server 104 transmits processed content file 106 to the cell phone 116 using content file protocol messages 110, such messages 110 are echoed at the data port 120 of the cell phone. Output device 124, which is monitoring the data port 120, recognizes that content file protocol messages 110 contain processed content file 106. Upon recognizing processed content file 106 in this manner, output device 124 receives all content file protocol messages 110 containing processed content file 106 (step 222). Output device 124 then outputs or saves processed content file 106 (step 224).

It should be appreciated that the techniques described above have a variety of advantages. For example, the user may select selected content file 102 for output or saving, causing selected content file 102 to be automatically downloaded to output device 124 and output or saved without disconnecting the cell phone 116 from the Internet 112 or changing the mode of operation of cell phone 116 from Internet mode. As a result, the user's web browsing experience is uninterrupted by the process of outputting selected content file 102. Furthermore, in one embodiment of the present invention, processed content file 106 is downloaded to output device 124 without modifying the contents of the display of the cell phone 116. For example, the web page from which selected content file 102 was selected may continue to be displayed while selected content file 102 is being output or saved by output device 124. Furthermore, it is not required that cell phone 116 be connected to output device 124 through an intermediate computer, such as a conventional desktop or laptop computer. Although the cell phone 116 may be connected to output device 124 through such an intermediate computer, the ability to connect the cell phone 116 directly to the output device 124 increases the user's mobility when output or saving, particularly if the output device is a portable output device.

In a second aspect of the present invention, techniques are provided for enabling an content file to be downloaded (e.g., over the Internet) from an content file server through a cellular telephone operating in modem mode and output or saved without requiring the user to initiate a connection to the content file server. More specifically, in one embodiment of the present invention, techniques are provided for:
(1) enabling a user to identify, using a cellular telephone in Internet mode, an content file stored on a web site (such as by using a web browser executing on the cellular telephone),
(2) at a server associated with the web site:
   (a) receiving a "output" or "save" command from the user;
   (b) in response to receipt of the output or save command, transmitting the content file to a output device through the cellular telephone in modem mode; and
(3) providing the output content file.

After the user issues the "output" or "save" command, the user may disconnect the cell phone from the Internet, causing the cell phone to cease operating in Internet mode. The user may then connect the output device to the data port of the cell phone (if it is not already connected). The cell phone establishes a connection between the server and the output device over a voice network in data mode. This connection may be initiated by, for example, the server or the output device.

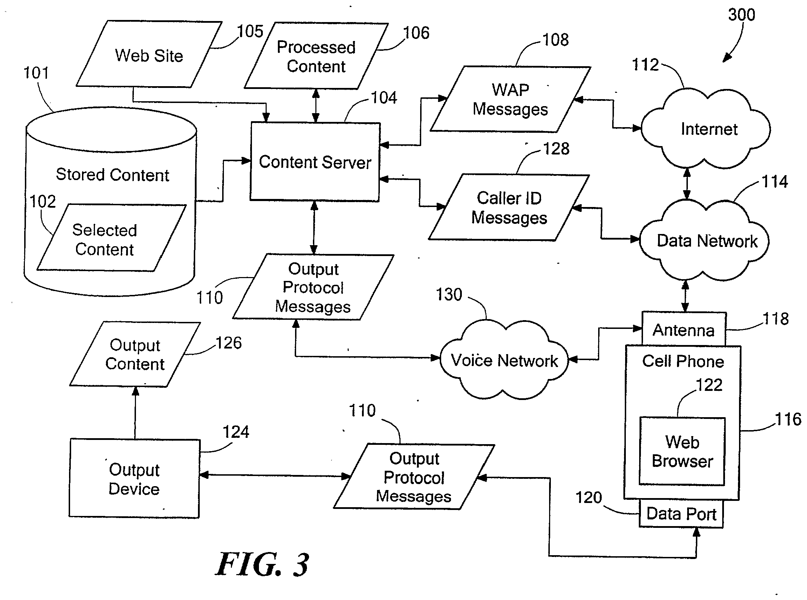

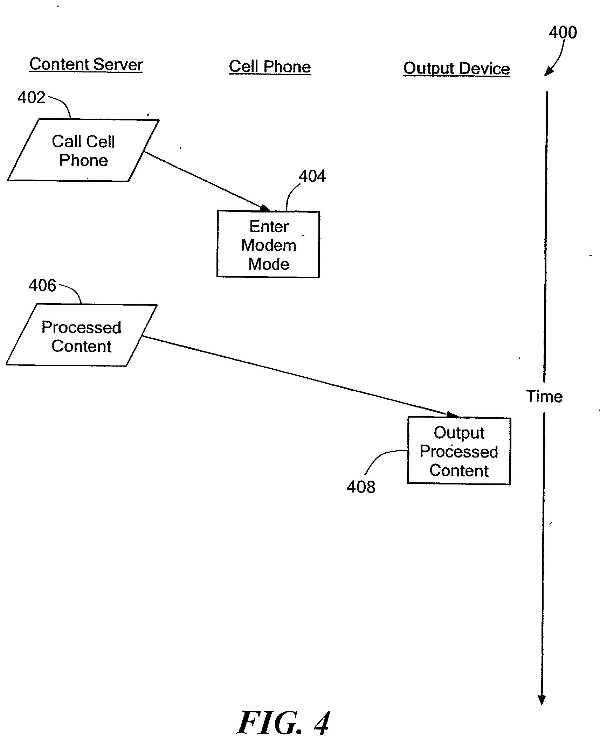

Referring to FIG. 3, various embodiments of this second aspect of the present invention will now be described in more detail. A system 300 shown in FIG. 3 may be used to output or save selected content file 102 in accordance with the second aspect of the present invention. Referring to data flow diagram 400 of FIG. 4, an example of a method that may be used to download and output or save an content file using the system 300 shown in FIG. 3 is now described. It should be appreciated that certain steps performed by this method are the same as or similar to steps 202-218 shown and described above with respect to FIGS. 2A-2B, and are therefore omitted from FIG. 4 for simplicity of illustration and explanation. It should therefore be assumed that step 402 (described in more detail below) may be performed after performing steps 202-218 or steps similar thereto.

Using system 300, a user of the cell phone 116 may connect to the Internet 112 in Internet mode as described above with respect to FIG. 1. Similarly, the user may select selected content file 102 and issue a "output" or "save" command to indicate a desired to output or save selected content file 102, as described above with respect to FIG. 1. It should be appreciated, however, that output device 124 need not be connected to data port 120 of cell phone 116 while the user browses the web, selects content file 102, and issues the "output" or "save" command. Therefore, the user may remain fully mobile while engaging in these activities, without any limitations that may be imposed by the fixed location of output device 124.

Upon receiving the "output" or "save" command, content file server 104 extracts selected content file 102 and optionally processes it to generate processed content file 106, as described above with respect to FIG. 1. In this embodiment, however, the user may disconnect the cell phone 116 from the Internet 112 after issuing the "output" or "save" command, thereby causing the cell phone 116 to cease operating in Internet mode.

A connection is then established between cell phone 116 and content file server 104 over voice network 130. Voice network 130 is a wireless network that is typically used by cell phone 116 for voice calls and may, for example, be an analog network. During the existence of this connection to content file server 104 over voice network 130, cell phone 116 operates in modem mode. In other words, cell phone 116 operates as a conduit between content file server 104 and output device 124, transmitting messages between the content file server 104 and output device 124 in a manner similar to a conventional modem.

The connection between cell phone 116 and content file server 104 over voice network 130 may be initiated in any of a variety of ways. For example, in one embodiment of the present invention, upon disconnecting the cell phone 116 from the Internet 112, the user initiates the connection. For example, the user may connect the output device 124 to the data port 120 of the cell phone 116 (if it is not already connected) and press a "output" or "save" button on the output device 124. In this embodiment, output device 124 is designed to dial a telephone number associated with the content file server 104 when the "output" or "save" button is pressed, thereby initiating a connection to the content file server 104 through the cell phone 116.

In another embodiment, upon receipt of the "output or save" command, the content file server 104 initiates a connection to the cell phone 116 over voice network 130. For example, as described above, content file server 104 may obtain the telephone number of the cell phone 116 using caller ID messages 128 at any time while the content file server 104 is connected to the cell phone 116 over data network 114. The content file server 104 may initiate a connection to cell phone 116 over voice network 130 by placing a telephone call to the cell phone (step 402), thereby placing the cell phone 116 in modem mode (step 404) and establishing a connection between the content file server 104 and the output device 124. If the cell phone 116 is still operating in Internet mode when it receives the call from the content file server 104 (if, for example, the user did not disconnect the cell phone 116 from the Internet 112 after issuing the "output" or "save" command), the cell phone 116 may automatically disconnect from the Internet 112 upon receiving the call from the content file server 104.

Once a connection is established between the content file server 104 and the cell phone 116 over the voice network 130, the content file server 104 may transfer the processed content file 106 to the output device 124 (step 406), which may then output or save content file 126 (step 408). Content file server 104 and output device 124 may communicate with each other over the voice network 130 using content file protocol messages 110, as described above. Because the cell phone 116 is not operating in Internet mode, however, the content file protocol messages 110 need not be defined to be free of interference with WAP messages 108. In this embodiment, therefore, the content file output protocol that defines content file protocol messages 110 may be defined in any manner without interfering with the operation of cell phone 116.

In a third aspect of the present invention, techniques are provided for enabling an content file to be downloaded through a cellular telephone and output or saved without requiring the cellular telephone to access the Internet. As a result, cellular telephones without Internet capabilities may be used in accordance with various embodiments of this third aspect of the present invention.

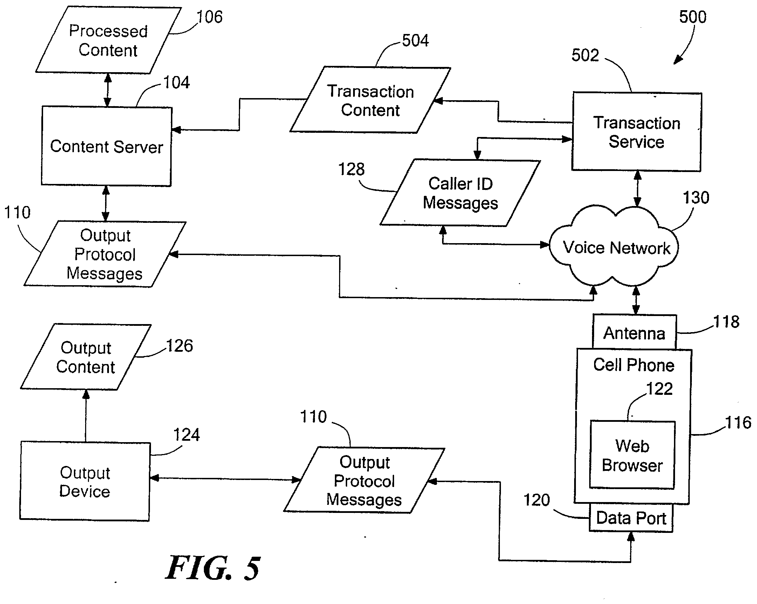

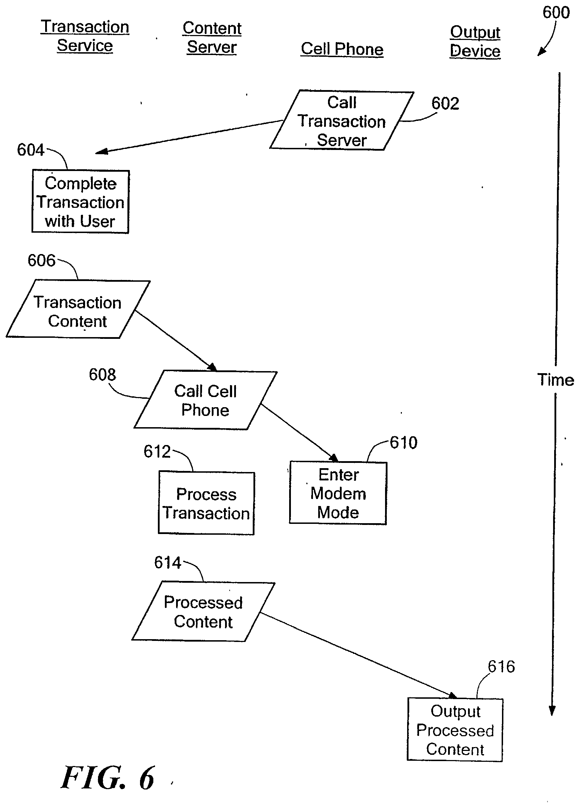

Referring to FIG. 5, various embodiments of this third aspect of the present invention will now be described in more detail. A system 500 shown in FIG. 5 may be used to output or save a transaction content file 504 associated with a transaction in accordance with the third aspect of the present invention. Referring to data flow diagram 600 of FIG. 6, an example of a method that may be used to download and output or save a content file using the system 500 shown in FIG. 5 is now described.

In particular, a user of the cell phone 116 may place a voice telephone call to a transaction service 502 over voice network 130 using cell phone 116 (step 602). During this call the cell phone 116 operates in voice mode. Transaction service 502 may be any transaction service, such as a service for purchasing event tickets or a service for requesting and/or purchasing information, such as maps, brochures, coupons, photographs, menus, or schedules. The user completes a transaction (such as purchasing a ticket) with transaction service 502 using a user interface provided by the transaction service 502 (step 604).

Upon completion of the transaction, transaction service 502 transmits a transaction content file 504 to content file server 104 (step 606). Transaction content file 504 may be any content file associated with the transaction, such as an content file of the ticket purchased by the user. Transaction service 502 may transmit transaction content file 504 to content file server 104 over any network (such as the Internet) and using any protocol. Transaction service 502 may also transmit other information about the transaction (not shown) to the content file server 104 to enable the content file server 104 to identify the cell phone 116 and/or the user of the cell phone 116. For examples, the transaction service 502 may transmit the telephone number of the cell phone 116, as obtained using caller ID messages 128. It should be appreciated that output device 124 need not be connected to data port 120 of cell phone 116 while the user completes the transaction with transaction service 502.

After completing the transaction with transaction service 502, the user connects output device 124 to data port 120 of cell phone 116 (if it is not already connected). A connection between cell phone 116 and content file server 104 is then initiated, with the cell phone 116 in modem mode. This connection may be initiated in any of a variety of ways, as described above with respect to FIG. 3. For example, the content file server 104 may call the cell phone 116 (step 608), establishing a connection with the cell phone over voice network 130 and causing the cell phone 116 to enter the modem mode of operation (step 610).

The content file server 104 may process the transaction content file 504 to produce processed content file 106 (step 612). The content file server 104 may process transaction content file 504 in any of a variety of ways, as described above with respect to processing of the selected content file 102 in FIG. 1. The content file server 104 may identify features of the output device 124 in any of a variety of ways, such as by querying the output device 124 for such features using content file protocol messages 110 (as described above with respect to FIG. 1), or by looking up the features in the user's account based on the telephone number of the cell phone 116, as provided to the content file server 104 by the transaction service 502.

Upon initiation of the connection between the content file server 104 and the output device 124 with the cell phone 116 operating in modem mode, content file server 104 transfers the processed content file 106 to the output device 124 (step 614), which may then output or save content file 126 (step 616). Content file server 104 and output device 124 may communicate with each other over the voice network 130 using content file protocol messages 110, as described above.

As described above with respect to FIG. 5, in one embodiment of the present invention, the content file server 104 may be used by the transaction service 502 for the content file processing and output capabilities provided by the content file server 104. The particular example illustrated in FIG. 5 is only one example of a manner in which the content file server 104 may be used, and does not constitute a limitation of the present invention. More generally, capabilities of the content file server 104 - such as the ability to produce processed content file 106 in accordance with particular capabilities of the output device 124 and the ability to transmit processed content file 106 to output device 124 for providing output over the data network 114 or the voice network 130 - may be used by other services in a variety of ways.

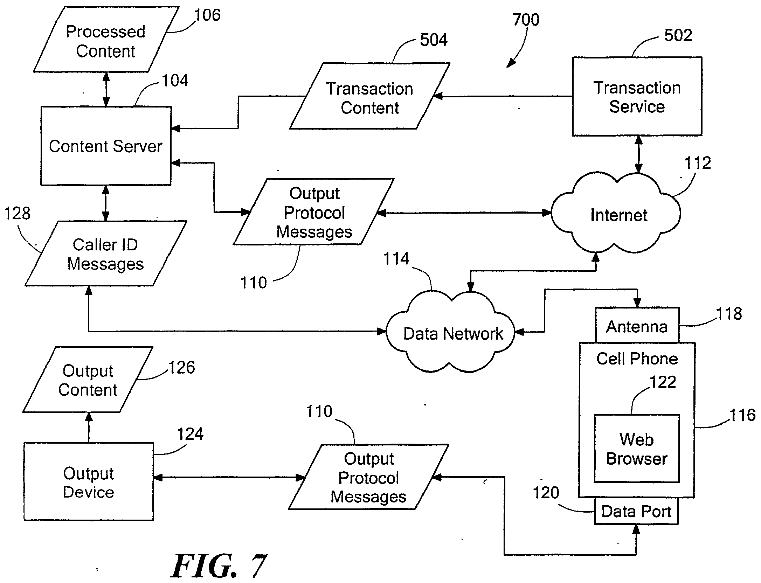

For example, referring to FIG. 7, a block diagram is shown of a system for downloading and providing an output content file associated with a transaction using a cell phone operating in Internet mode according to one embodiment of the present. A user connects to the transaction service 502 over the Internet 112 using the cell phone 116 in Internet mode. The user completes a transaction with the transaction service 502 using a web site (not shown) provided by transaction service 502, causing transaction service 502 to transmit transaction content file 504 to content file server 104 as described above with respect to FIG. 5. Content file server 104 processes transaction content file 504 to produce processed content file 106 as described above with respect to FIG. 5.

The processed content file 106 may be outputted or saved in any of a variety of ways. For example, content file server 104 may transmit processed content file 106 to output device 124 for providing output using any of the techniques described herein. Alternatively, the content file server 104 may transmit the processed content file 106 back to the transaction server 502, which may transmit the processed content file 106 over the Internet 112 and data network 114 to output device 124, which may output or save processed content file 106 as content file 126. The transaction server 502 may communicate with output device 124 using the content file output protocol described above, thereby enabling processed content file 106 to be output or saved without interfering with the operation of cell phone 116 and without causing cell phone 116 to cease operating in Internet mode. As a result, the user may interact solely with the user interface provided by the transaction service's web site, and the capabilities (e..g., generation of the processed content file 106) provided by the content file server 104 may be provided transparently, without any interaction by or knowledge of the user. The content file server 104 may therefore act as an application service that is used by the transaction server 502 to produce processed content file 106 in a format that is suitable for providing output by output device 124.

As mentioned above, content file server 104 may process the selected content file 102 (or transaction content file 504) to generate processed content file 106. In general, references herein to processing of the selected content file 102 also apply to processing of the transaction content file 504. The processing used by the content file server 104 to produce processed content file 106 may take any of a variety of forms. For example, in one embodiment, content file server 104 compresses selected content file 102 so that processed content file 106 may be transmitted more quickly to cell phone 116.

In another embodiment, content file server 104 modifies selected content file 102 based on capabilities of the output device 124. For example, content file server 104 may modify selected content file 102 by changing its format or file size. For example, where the content file is a digital music file, content file server 104 may convert selected content file 102 from an MP3 format, for example, to a file in a format compatible with a Digital Rights Management plug-in, .NAP for example, if output device 124 is only capable of providing output in such a format. (For a discussion on Digital Rights Management see, for example, S. M. Cherry, Making Music Pay, IEEE Spectrum, Vol.38, No. 10, pp. 41-46, October 2001.)Similarly, where the content file is a compressed digital music file, content file server 104 may convert selected content file 102 from one compression level to a different compression level in order to obtain a content file of a file size that output device 124 is capable of handling. Content file server 102 may also modify selected content file 102 in any of a variety of other ways to tailor processed content file 106 more specifically to the capabilities of output device 124.

Content file server 104 may obtain knowledge of the capabilities of the output device 124 in any of a variety of ways. For example, output device 124 may provide such information to content file server 104 over the Internet 112, the data network 114, the voice network 130, or any combination thereof. For example, the output device 124 may transmit such information to content file server 104 using content file protocol messages 110 defined according to the content file output protocol described generally above, a particular embodiment of which is described in more detail below. It should be appreciated that the output device 124 may transmit a limited amount of information about its capabilities, such as its manufacturer and model number, to the content file server 104, and that the content file server 104 may infer therefrom additional information about the output device 124. For example, content file server 104 may maintain a database of output device capabilities for a variety of output device manufacturers and models. In response to receiving the manufacturer and model information from output device 124, content file server 104 may obtain additional information about output device 124 (such as the format and file size at which it is capable of output) from the database.

Output device 124 may transmit information descriptive of its capabilities at any time. For example, in one embodiment of the present invention, content file server 104 transmits a request for output device capability information to the output device 124 in response to the user's selection of selected content file 102. In response to receipt of this request for information, output device 124 transmits the requested information to content file server 104. Content file server 104 may use such information to generate processed content file 106 from selected content file 102. Content file server 104 may store the output device capability information for an additional period of time, such as the duration of the user's web browsing session, so that the content file server 104 need not request the output device capability information each time the user selects an content file to be output or saved.

In various embodiments of the invention described above, content file server 104 communicates with output device 124 using content file protocol messages 110 defined according to an content file output protocol. The content file output protocol may take any of a variety of forms.

For example, if the content file server 104 and output device 124 communicate with each other while the cell phone 116 is operating in Internet mode (such as in the embodiment depicted in FIG. 1), the content file output protocol may define messages that are designed not to interfere with WAP messages 108 used by the cell phone 116 to communicate over the Internet 112. For example, all messages defined according to the content file output protocol may include a sequence of characters - such as ten consecutive nulls - that do not constitute a WAP-compliant message. As a result, any such message sent by the content file server 104 or the output device 124 through cell phone 116 will be ignored by the cell phone 116 (which only understands and responds to WAP-compliant messages), and will therefore not interfere with the normal operation of the cell phone 116. For example, transmission of such messages through the cell phone 116 in either direction will not cause spurious characters or other graphics to be displayed on the cell phone's display. When the cell phone 116 receives such a message through its antenna 118, the message will be echoed at the cell phone's data port 120, where it can be received by the output device 124. Conversely, when such a message is transmitted by output device 124 to the cell phone's data port 120, the message will be transmitted by the cell phone 116 through its antenna 118. In this manner, the content file server 104 and output device 124 may use the cell phone 116 as a communications device for transmitting and receiving content file protocol messages 110 while the cell phone 116 is in Internet mode without interfering with the operation of the cell phone.

It should be appreciated that that if the cell phone 116 is operating in modem mode, content file protocol messages 110 need not be defined to be free of interference with WAP messages 108, since the cell phone 116 acts merely as a passive conduit of information while operating modem mode and does not attempt to interpret messages transmitted through it.

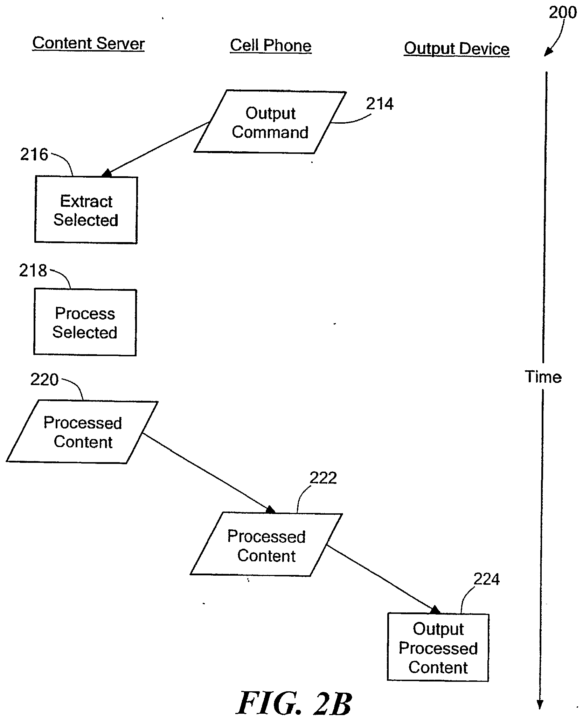

The content file output protocol may define any of a variety of messages for enabling communication between the content file server 104 and the output device 124. For example, in one embodiment, the content file output protocol defines messages including the following:
- INIT. This message is transmitted from the content file server 104 to the output device 124 to notify the output device 124 that the content file server 104 is requesting the initiation of communication between the content file server 104 and output device 124. The content file server 104 may, for example, transmit this message in response to receipt of the "output" or "save" command from the user (e.g., after step 214 in FIG. 2).
- REQUEST_SPECS. This message is transmitted from the content file server 104 to the output device 124 to request information about the output device 124. The manner in which this information may be used is described in more detail above.
- TRANSMIT_SPECS. This message is transmitted from the output device 124 to the content file server 104, in response to the REQUEST_SPECS message. Included in the message are the specifications requested by the server. A REQUEST_SPECS message and corresponding TRANSMIT_SPECS message may be transmitted, for example, between steps 216 and 218 in FIG. 2.
- TRANSMIT_CONTENT FILE. This message is transmitted from the content file server 104 to the output device 124 after the content file server 104 receives the requested output device specifications. The message includes the process content file 106 to be output or saved. The TRANSMIT_CONTENT FILE message may, for example, be used to implement step 220 in FIG. 2.
- END. This message is transmitted from the content file server 104 to the output device 124 at the conclusion of transmission of the processed content file 106 to the output device 124 (e.g., after step 222 in FIG. 2). After receipt of the END command from the content file server 104, the output device 124 may output or save the processed content file 106 (step 224 in FIG. 2).

It should be appreciated that messages 110 defined by the content file output protocol (such as the examples provided in the list above) may be encoded in any manner. For example, as described above, in one embodiment, each of the messages defined by the content file output protocol may be a unique sequence of characters that does not define a message according to WAP. Defining content file protocol messages 110 in this manner enables the content file server 104 and output device 124 to communicate with each other without interfering with the operation of the cell phone 116 in Internet mode.

It should be appreciated that particular implementations of the content file output protocol may involve additional messages not shown here but which will be apparent to those of ordinary skill in the art. For example, messages transmitted by the content file server 104 (such as the INIT command) may have corresponding acknowledgement (ACK) messages which are transmitted in response by the output device 124 as a method of handshaking. As another example, the TRANSMIT_CONTENT FILE message may be transmitted from the content file server 104 to the output device 124 as a plurality of messages, each of which contains a portion of the processed content file 106. The content file output protocol may also include provisions for error detection and/or correction. Such implementation details of particular embodiments of the content file output protocol are not described here for simplicity of explanation and will be apparent to those of ordinary skill in the art.

Various aspects and embodiments of the present invention have various advantages, which include but are not limited to the following.

As described above, in one aspect of the present invention techniques are provided for enabling an content file to be downloaded over the Internet through a cellular telephone and output or saved while the cellular telephone is operating in Internet mode. For example, the user may connect to the Internet using the cell phone in Internet mode, browse to a web site using the cell phone's web browser, and select an content file on the web site using the cell phone's web browser. The user may then simply issue a "output" or "save" command to the web site's web server, causing the selected content file to be automatically downloaded and output or saved without disconnecting the cell phone from the Internet. The ability to output or save an content file without disconnecting the cell phone from the Internet advantageously maintains the continuity of the user's browsing experience.

This provides a simplified method for providing output content files, compared,to the conventional technique described above in which the user who desires to output or save a digital content file identified on the Web using a cell phone operating in Internet mode must disconnect the cell phone from the Internet, connect a computer to the cell phone, manually initiate a new connection to the Internet through the cell phone in modem mode, navigate to the web site containing the identified content file, and output or save the content file from the computer's web browser. This prior art technique requires a significant amount of activity on the part of the user, including the requirement that the user remember the precise Internet address of the content file to be output or saved. In contrast, the embodiment of the invention described above automates the process of providing output content files from the Web and decreases the amount of time needed to output or save such content files.

As described above, in another aspect of the present invention, an content file server may initiate a call to a cell phone in modem mode in response to receipt of the "output" or "save" command from the user. Although this technique may cause the cell phone's Internet mode connection to the Internet to terminate, it still retains the advantages of automating the process of downloading and providing outputting of the selected content file, and the advantage of freeing the user from the need to recall and manually re-navigate to the Internet address of the desired content file in order to output or save it.

As further described above, in one embodiment of the present invention, the server may tailor the selected content file based on the capabilities of the output device. This feature has a variety of advantages. For example, the content file may be output or saved at high resolution on a output device capable of providing output at high resolution and at low resolution on a output device only capable of providing output at low resolution. As another example, the content file server may shrink the content file when providing output to a small, mobile output device. More generally, the content file server may use the known capabilities of the output device to tailor the content file in such a manner that it is rendered optimally by the output device. The ability of the content file server to tailor the content file to the specifications of the output device also makes the quality and features of the output or saved content file independent of the (typically limited) quality and features of the cell phone's display. For example, the content file server may provide a full-page, color, high-resolution content file for providing output on a full-featured output device even though the display of the cell phone is only capable of displaying small, low-resolution, black-and-white images

Furthermore, as described above, in various embodiments of the present invention, a cell phone may be connected directly to a output device, which may download content files over a network (such as the Internet) and output or save the downloaded content files. The ability to use a cell phone in conjunction with a output device to download and output or save content files without the use of a computer (such as a desktop or laptop computer) increases the mobility of the user when obtaining output files, particularly if the output device is a portable output device.

A further advantage of various embodiments of the present invention described above is that most of the processing involved is performed by the content file server, rather than the cell phone or the output device. For example, any pre-processing of the content file (such as color transformation, compression, etc.) may be performed by the content file server. The content file server typically has much greater computational and storage resources than the cell phone or output device, and is therefore more suitable for performing such tasks. A related advantage is that the content file is typically stored and processed locally to the server before compressing the content file. Since the processed content file is therefore typically smaller than the original content file, less bandwidth is used to transmit the processed content file to the output device than if the original content file were transmitted to the cell phone or output device for processing. This decreases the amount of time needed to transmit the content file from the server to the output device. This is a particular advantage given the relatively low bandwidth of most current wireless networks.

Furthermore, since the functions related to providing output are performed by the server and the output device, the cell phone need not be equipped with any significant processing capabilities. For example, in embodiments in which the server and output device communicate through the cell phone while the cell phone operates in Internet mode, the cell phone may simply be equipped with the ability to echo Internet communications to the output device through the cell phone's data port. In embodiments in which the server and output device communicate through the cell phone while the cell phone operates in modem mode, the cell phone need only be capable of operating as a modem. As a result, conventional cellular telephones may be used in conjunction with various embodiments of the present invention with few, if any, modifications.

Similarly, in various embodiments of the present invention, conventional output devices may be used as the output device 124 with minimal modifications. For example, a conventional output device may be modified to support (using software and/or hardware) the content file output protocol described herein. Since implementation of this protocol may only involve performance of simple actions such as polling the Internet connection for the initiation of an content file transmission and downloading an content file, the output device may be enabled to support the content file output protocol with a minimum of hardware and/or software.

Additional aspects and embodiments of the present invention will be described in more detailed below.

It should be appreciated that the various embodiments described above are provided merely for purposes of example and do not constitute limitations of the present invention. Rather, various other embodiments are also within the scope of the claims, such as the following. The cell phone 116 may be any mobile and/or handheld device capable of conducting wireless communications, such as a personal digital assistant (PDA) or a digital camera with wireless capability. The cell phone 116 and output device 124 could be combined into a single mobile device capable of conducting wireless communication and providing output digital content files. Caller ID messages 128 may be transmitted over the data network 114, the voice network 130, or a combination thereof. The data network 114 and voice network 130 may not be entirely wireless. Rather, the term "wireless" herein refers to the use of wireless communications by the cell phone 116 through its antenna 118.

Although server 104 is described herein as an "content file server," it should be appreciated that more generally the server 104 is a output server that may serve any kind of information - referred to herein as " output information" - suitable for transmission to the output device 124. Similarly, stored content files 101 may contain information other than images, and selected content file 102 and processed content file 106 may be information other than images. As used herein, the term " output information" refers to information including but not limited to images, text, video, web pages, and any combination thereof. The output device 124 may further process the output information that it receives (such as processed content file 106) to produce output or saved content file 126.

The Internet 112 is provided merely as an example of a network with which various embodiments of the present invention may be used. Various other networks, however, may also be employed instead of or in addition to the Internet 112. For example, an internet other than the public Internet 112 may be used. Alternatively, communications described herein as occurring over both the Internet 112 and the data network 114 may, for example, occur solely over the data network 114.

Furthermore, the term "connection" as used herein (e.g., a connection between cell phone 116 and content file server 104) refers to any kind of connection that enables communication between or among two or more devices. For example, a "connection" may be a physical and/or logical connection enabled by any combination of wired and/or wireless networks. For example, the term "connection" refers to connections established over the data network 114, voice network 130, and the Internet 112, and combinations thereof.

It should be appreciated that the output device 124 may be connected to data port 120 of cell phone 116 in any of a variety of ways. For example, a data cable may be coupled between a data port on the output device 124 and data port 120 of cell phone 116. Any form of data communications may be used to communicate between output device 124 and data port 120, including but not limited to wireless communications means such as BlueTooth and Infrared Data Association (IrDA)It should be appreciated that a "coupling" between the output device 124 and data port 120 refers generally to any means for enabling communication between output device 124 and data port 120.

The output device 124 is described herein as performing various functions, such as communicating in accordance with the content file output protocol and providing the output or saved content file 126, in accordance with various embodiments of the present invention. It should be appreciated that such functionality may be implemented within the output device 124 in any manner, such as by using hardware, software, firmware, or any combination thereof. In general, a output device "controller" refers herein generally to any such subsystem(s) of the output device 124 that perform the functions described herein.

Although the cell phone 116 is described in the examples above as performing the functions of a passive conduit of information between the content file server 104 and the output device 124, the cell phone 116 may perform additional functions. For example, the cell phone 116 may perform some of the functions associated with sending, receiving, and/or interpreting the content file protocol messages 110. For example, the cell phone 116 may be a Java-enabled cell phone on which a Java application or applet executes which is capable of interpreting content file protocol messages 110. Such software may, for example, perform some of the handshaking associated with the content file output protocol described above. The cell phone 116 may also perform other functions that are described as being performed by the content file server 104, the output device 124, or other components above.

Although examples are provided above in which content files are outputted or saved in response to actions performed by the user, this is not a limitation of the present invention. Rather, content files may be automatically output or saved without any prompting by the user. For example, a coupon or advertisement may be automatically outputted or saved when a user navigates to a particular web site, without the initiation of any particular action by the user at that web site.

Output device as described herein refers to any device for receiving input and producing output. Such input/output includes, for example, still images, audio files (such as MP3 files) and audiovisual files (such as DVD compatible files). The device referred to as output device herein may be, for example, a CD drive (such as CD-r or a CD-RW drive), a DVD drive (such as a DVD-R, DVD-RAM, DVD-RW+, DVD-RW drive) or an MP3 or other digital music player. The digital content output may be, for example, a digital audio file such as MP3 or a controlled access digital audio file such a NAP file, an audiovisual file such as an MPEG file, or files in other compressed formats for audio or audiovisual information. The output may be in the form of a computer readable medium such as, for example, a CD-R, CD-RW disk or a DVD-r, DVD-RAM, DVD-RW, or DVD-RW+ disk, or stored in a solid state memory such as RAM.

In general, the techniques described above may be implemented, for example, in hardware, software, firmware, or any combination thereof. The techniques described above may be implemented in one or more computer programs executing on a programmable computer including a processor, a storage medium readable by the processor (including, for example, volatile and non-volatile memory and/or storage elements), at least one input device, and at least one output device. Program code may be applied to data entered using the input device to perform the functions described and to generate output information. The output information may be applied to one or more output devices.

Elements and components described herein may be further divided into additional components or joined together to form fewer components for performing the same functions.

Each computer program within the scope of the claims below may be implemented in any programming language, such as assembly language, machine language, a high-level procedural programming language, or an object-oriented programming language. The programming language may be a compiled or interpreted programming language.

Each computer program may be implemented in a computer program product tangibly embodied in a machine-readable storage device for execution by a computer processor. Method steps of the invention may be performed by a computer processor executing a program tangibly embodied on a computer-readable medium to perform functions of the invention by operating on input and generating output.

In the claims below, audiovisual information describes audio or audiovisual data, such as MP3 or similar files for audio or MPEG or similar files for video. To output or render, in the claims below, describes the outputting or the saving of a content file.

It is to be understood that although the invention has been described above in terms of particular embodiments, the foregoing embodiments are provided as illustrative only, and do not limit or define the scope of the invention. Other embodiments are also within the scope of the present invention, which is defined by the scope of the claims below.

## Claims

1. A system comprising:
a server (104), configured to provide digital content in the form of messages (110) defined according to a content file output protocol;
a mobile communications device (116) capable of communicating with the server (104) over a wireless data network using messages (108) defined according to Wireless Application Protocol, WAP, or NTT DoCoMo I-mode, I-mode; and
an output device (124) coupled to a port (120) of the mobile communications device (116) through which digital content in the form of messages (110) defined according to the content file output protocol and received by the mobile communications device from the server over the wireless data network is transmitted to the output device,
wherein the mobile communications device is configured to echo, at the port (120), all messages (108, 110) received from the server (104), wherein each of the messages (110) defined by the content file output protocol includes a unique sequence of characters that does not define a message (108) according to the WAP or I-mode, and
wherein the output device comprises a controller configured to monitor the messages (108, 110) echoed at the port (120) of the mobile communications device and receive the messages (110) defined according to the content file output protocol.

2. The system of claim 1, wherein the mobile communications device is a handheld device.

3. The system of claim 1, wherein the digital content comprises an image.

4. The system of claim 1, wherein the mobile communications device is a cellular telephone.

5. The system of claim 1, wherein the mobile communications device is a personal digital assistant.

6. The system of claim 1, wherein the digital content comprises audiovisual information.

7. The system of claim 1, wherein the output device is configured to send output device information to the mobile communications device, wherein the mobile communications device is configured to send the output device information to the server, and wherein the server is configured to process the digital content based on the output device information.

8. A method comprising:
receiving, at a mobile communications device (116), digital content in the form of messages (110) defined according to a content file output protocol from a server (104), the mobile communication device capable of communicating with the server (104) over a wireless data network (114) using messages (108) defined according to Wireless Application Protocol, WAP, or NTT DoCoMo I-mode, I-mode;
echoing, at a port (120) of the mobile communications device (116), all messages (108, 110) received from the server (104);
monitoring, by an output device (124) that is coupled to the port (120) of the mobile communications device, the messages echoed at the port (120) of the mobile communications device; and
receiving, at the output device (124), the messages (110) defined according to the content file protocol from the mobile communications device through the port (120) of the mobile communications device (116),
wherein each of the messages (110) defined by the content file protocol includes a unique sequence of characters that does not define a message (108) according to WAP or I-mode.

9. The method of claim 8, wherein the digital content comprises audiovisual information.

10. The method of claim 8, wherein the mobile communications device is a cellular telephone.

11. The method of claim 8, wherein the digital content comprises an image.

12. The method of claim 8, wherein the mobile communications device is a handheld device.

13. The method of claim 8, wherein the communications device is a personal digital assistant.

14. The method of claim 8, further comprising:
sending output device information from the output device to the mobile communications device,
wherein the mobile communications device is configured to send the output device information to the server, and wherein the server is configured to process the digital content based on the output device information.

## Patentansprüche

1. System, das Folgendes umfasst:
einen Server (104), der zum Bereitstellen von digitalem Inhalt in Form von Nachrichten (110), die gemäß einem Inhaltdateiausgabeprotokoll definiert sind, konfiguriert ist;
eine Mobilkommunikationsvorrichtung (116), die zum Kommunizieren mit dem Server (104) über ein Drahtlosdatennetz unter Verwendung von Nachrichten (108), die gemäß dem Wireless-Application-Protokoll, WAP, oder dem NTT-DoCoMo-I-Mode, I-Mode, definiert sind, in der Lage ist; und
eine Ausgabevorrichtung (124), die mit einem Port (120) der Mobilkommunikationsvorrichtung (116) gekoppelt ist, durch die digitaler Inhalt in der Form von Nachrichten (110), die gemäß dem Inhaltdateiausgabeprotokoll definiert sind und durch die Mobilkommunikationsvorrichtung von dem Server über das Drahtlosnetzwerk empfangen werden, an die Ausgabevorrichtung übertragen wird,
wobei die Mobilkommunikationsvorrichtung zum Wiederholen von allen Nachrichten (108, 110), die von dem Server (104) empfangen werden, an dem Port (120) konfiguriert ist, wobei jede der Nachrichten (110), die durch das Inhaltdateiausgabeprotokoll definiert sind, eine eindeutige Sequenz von Zeichen beinhaltet, die keine Nachricht (108) gemäß dem WAP oder I-Mode definieren, und
wobei die Ausgabevorrichtung eine Steuerung umfasst, die zum Überwachen der Nachrichten (108, 110), die an dem Port (120) der Mobilkommunikationsvorrichtung wiederholt werden, und zum Empfangen der Nachrichten (110), die gemäß dem Inhaltdateiausgabeprotokoll definiert sind, konfiguriert ist.

2. System nach Anspruch 1, wobei die Mobilkommunikationsvorrichtung eine Handgerätvorrichtung ist.

3. System nach Anspruch 1, wobei der digitale Inhalt ein Bild umfasst.

4. System nach Anspruch 1, wobei die Mobilkommunikationsvorrichtung ein Mobiltelefon ist.

5. System nach Anspruch 1, wobei die Mobilkommunikationsvorrichtung ein persönlicher digitaler Assistent (Personal Digital Assistant) ist.

6. System nach Anspruch 1, wobei der digitale Inhalt audiovisuelle Informationen umfasst.

7. System nach Anspruch 1, wobei die Ausgabevorrichtung zum Senden von Ausgabevorrichtungsinformationen an die Mobilkommunikationsvorrichtung konfiguriert ist, wobei die Mobilkommunikationsvorrichtung zum Senden der Ausgabevorrichtungsinformationen an den Server konfiguriert ist und wobei der Server zum Verarbeiten des digitalen Inhalts basierend auf den Ausgabevorrichtungsinformationen konfiguriert ist.

8. Verfahren, das Folgendes umfasst:
Empfangen von digitalem Inhalt in der Form von Nachrichten (110), die gemäß einem Inhaltdateiausgabeprotokoll definiert sind, von einem Server (104) an der Mobilkommunikationsvorrichtung (116), wobei die Mobilkommunikationsvorrichtung zum Kommunizieren mit dem Server (104) über ein Drahtlosdatennetz (114) unter Verwendung von Nachrichten (108), die gemäß dem Wireless-Application-Protokoll, WAP, oder dem NTT-DoCoMo-I-Mode, I-Mode, definiert sind, in der Lage ist;
Wiederholen von allen Nachrichten (108, 110), die von dem Server (104) empfangen werden, an einem Port (120) der Mobilkommunikationsvorrichtung (116);
Überwachen der Nachrichten, die an dem Port (120) der Mobilkommunikationsvorrichtung wiederholt werden, durch eine Ausgabevorrichtung (124), die mit dem Port (120) gekoppelt ist; und
Empfangen der Nachrichten (110), die gemäß dem Inhaltdateiprotokoll definiert sind, von der Mobilkommunikationsvorrichtung durch den Port (120) der Mobilkommunikationsvorrichtung (116) an der Ausgabevorrichtung (124),
wobei jede der Nachrichten (110), die durch das Inhaltdateiprotokoll definiert sind, eine eindeutige Sequenz von Zeichen beinhaltet, die keine Nachricht (108) gemäß dem WAP oder I-Mode definieren.

9. Verfahren nach Anspruch 8, wobei der digitale Inhalt audiovisuelle Informationen umfasst.

10. Verfahren nach Anspruch 8, wobei die Mobilkommunikationsvorrichtung ein Mobiltelefon ist.

11. Verfahren nach Anspruch 8, wobei der digitale Inhalt ein Bild umfasst.

12. Verfahren nach Anspruch 8, wobei die Mobilkommunikationsvorrichtung eine Handgerätvorrichtung ist.

13. Verfahren nach Anspruch 8, wobei die Kommunikationsvorrichtung ein persönlicher digitaler Assistent (Personal Digital Assistant) ist.

14. Verfahren nach Anspruch 8, das ferner Folgendes umfasst:
Senden von Ausgabevorrichtungsinformationen von der Ausgabevorrichtung an die Mobilkommunikationsvorrichtung,
wobei die Mobilkommunikationsvorrichtung zum Senden der Ausgabevorrichtungsinformationen an den Server konfiguriert ist und wobei der Server zum Verarbeiten des digitalen Inhalts basierend auf den Ausgabevorrichtungsinformationen konfiguriert ist.

## Revendications

1. Système comprenant :
un serveur (104), configuré pour fournir un contenu numérique sous la forme de messages (110) définis en fonction d'un protocole de sortie de fichier de contenu ;
un dispositif de communication mobile (116) qui peut communiquer avec le serveur (104) sur un réseau de données sans fil à l'aide de messages (108) définis en fonction d'un protocole d'application sans fil (WAP) ou d'un service i-mode de NTT DoCoMo(i-mode) ; et
un dispositif de sortie (124) couplé à un port (120) du dispositif de communication mobile (116) au moyen duquel un contenu numérique sous la forme de messages (110) définis en fonction du protocole de sortie de fichier de contenu et reçus par le dispositif de communication mobile en provenance du serveur sur le réseau de données sans fil est transmis au dispositif de sortie,
dans lequel le dispositif de communication mobile est configuré pour reprendre, au niveau du port (120), tous les messages (108, 110) reçus du serveur (104), dans lequel chaque message (110) défini par le protocole de sortie de fichier de contenu comprend une séquence unique de caractères qui ne définit pas un message (108) en fonction du protocole WAP ou du service i-mode, et
dans lequel le dispositif de sortie comprend un dispositif de commande configuré pour surveiller les messages (108, 110) repris au niveau du port (120) du dispositif de communication mobile et recevoir les messages (110) définis en fonction du protocole de sortie de fichier de contenu.

2. Système selon la revendication 1, dans lequel le dispositif de communication mobile est un dispositif portable.

3. Système selon la revendication 1, dans lequel le contenu numérique comprend une image.

4. Système selon la revendication 1, dans lequel le dispositif de communication mobile est un téléphone cellulaire.

5. Système selon la revendication 1, dans lequel le dispositif de communication mobile est un assistant numérique personnel.

6. Système selon la revendication 1, dans lequel le contenu numérique comprend des informations audiovisuelles.

7. Système selon la revendication 1, dans lequel le dispositif de sortie est configuré pour envoyer des informations de dispositif de sortie au dispositif de communication mobile, dans lequel le dispositif de communication mobile est configuré pour envoyer les informations de dispositif de sortie au serveur et dans lequel le serveur est configuré pour traiter le contenu numérique en se basant sur les informations de dispositif de sortie.

8. Procédé consistant :
à recevoir, au niveau d'un dispositif de communication mobile (116), un contenu numérique sous la forme de messages (110) définis en fonction d'un protocole de sortie de fichier de contenu en provenance d'un serveur (104), le dispositif de communication mobile pouvant communiquer avec le serveur (104) sur un réseau de données sans fil (114) à l'aide de messages (108) définis en fonction d'un protocole d'application sans fil (WAP) ou d'un service i-mode de NTT DoCoMo(i-mode) ;
à reprendre, au niveau d'un port (120) du dispositif de communication mobile (116), tous les messages (108, 110) reçus du serveur (104) ;
à surveiller, au moyen d'un dispositif de sortie (124) qui est couplé au port (120) du dispositif de communication mobile, les messages repris au niveau du port (120) du dispositif de communication mobile ; et
à recevoir, au niveau du dispositif de sortie (124), les messages (110) définis en fonction du protocole de fichier de contenu en provenance du dispositif de communication mobile au moyen du port (120) du dispositif de communication mobile (116),
dans lequel chaque message (110) défini par le protocole de fichier de contenu comprend une séquence unique de caractères qui ne définit pas un message (108) en fonction du protocole WAP ou du service i-mode.

9. Procédé selon la revendication 8, dans lequel le contenu numérique comprend des informations audiovisuelles.

10. Procédé selon la revendication 8, dans lequel le dispositif de communication mobile est un téléphone cellulaire.

11. Procédé selon la revendication 8, dans lequel le contenu numérique comprend une image.

12. Procédé selon la revendication 8, dans lequel le dispositif de communication mobile est un dispositif portable.

13. Procédé selon la revendication 8, dans lequel le dispositif de communication mobile est un assistant numérique personnel.

14. Procédé selon la revendication 8, consistant en outre :
à envoyer des informations de dispositif de sortie à partir du dispositif de sortie au dispositif de communication mobile,
dans lequel le dispositif de communication mobile est configuré pour envoyer les informations de dispositif de sortie au serveur et dans lequel le serveur est configuré pour traiter le contenu numérique en se basant sur les informations de dispositif de sortie.
